**Europäisches Patentamt**

**European Patent Office**

**Office européen des brevets**

(19)

(11) Veröffentlichungsnummer: **0 072 420**
**B1**

(12) # EUROPÄISCHE PATENTSCHRIFT

(45) Veröffentlichungstag der Patentschrift:
**29.01.86**

(21) Anmeldenummer: **82105863.3**

(22) Anmeldetag: **01.07.82**

(51) Int. Cl.⁴: **A 01 G 17/04**, E 04 H 17/10

(54) **Vorrichtung zur Halterung von Spanndrähten für den Einsatz im Wein- und Obstanbau.**

(30) Priorität: **05.08.81 DE 3130949**

(43) Veröffentlichungstag der Anmeldung:
**23.02.83 Patentblatt 83/8**

(45) Bekanntmachung des Hinweises auf die Patenterteilung:
**29.01.86 Patentblatt 86/5**

(84) Benannte Vertragsstaaten:
**AT CH DE FR IT LI**

(56) Entgegenhaltungen:
**AT - B - 252 648**
**DE - B - 1 212 768**
**DE - B - 2 155 416**
**DE - U - 7 229 103**
**DE - U - 7 515 899**
**FR - A - 2 238 424**
**US - A - 1 452 766**
**US - A - 1 454 254**
**US - A - 1 639 195**

(73) Patentinhaber: **Gebhardt, Manfred, Unnaer Strasse 8,**
**D-4760 Werl (DE)**

(72) Erfinder: **Gebhardt, Manfred, Unnaer Strasse 8,**
**D-4760 Werl (DE)**

(74) Vertreter: **Patentanwälte Meinke und Dabringhaus**
**Dipl.-Ing. J. Meinke Dipl.-Ing. W. Dabringhaus,**
**Westenhellweg 67, D-4600 Dortmund 1 (DE)**

ACTORUM AG

**Beschreibung**

Die Erfindung richtet sich auf eine Vorrichtung zur Halterung von Spanndrähten für den Einsatz im Wein- und Obstanbau mit einem in das Erdreich eintreibbaren aus profiliertem Blech gebildeten und wenigstens zwei in seiner Längsrichtung verlaufende Klemmflansche aufweisenden Stützstab, wobei der Stützstab ein mit Ausprägungen zwischen den Klemmflanschen versehenen Mittelabschnitt aufweist, und mit den Klemmflanschen zugeordneten als Bügel aus Draht, Kunststoff o.dgl. ausgebildeten Spanndraht-Halteelementen mit Klemmabschnitten zur Anlage an den Klemmflanschen (US-A-1 452 766).

Insbesondere im Weinbau werden in zunehmendem Masse sogenannte Weinbergstickel aus Metall eingesetzt, die Spanndrähte tragen, an denen die Weinrebe befestigt werden. Um u.a. mit dem Wachstum Schritt zu halten, ist es notwendig, diese Spanndrähte mehrfach umzusetzen. Aus diesem Grund ist bereits eine Vielzahl von Vorschlägen gemacht worden, die Spanndrähte so in den Stickeln zu lagern, dass ein leichtes Auswerfen des gesamten Spanndrahtes möglich ist (DE-U-72 29 103 oder DE-U-75 15 899). Da derartige Stickel wenigstens eine Generation halten sollen, was beim Wein eine Zeitspanne von 20–25 Jahren bedeutet, müssen die Stickel so gefertigt sein, dass sie neben einer einfachen Handhabung der Spanndrähte auch gerüstet sind, diese langen Zeiten der Witterung und damit der Korrosionsgefahr ausgesetzt zu sein.

Es hat sich gezeigt, dass trotz Versuche auf diesem Gebiet, die bekannten Weinbergstickel eine Fülle von Nachteilen aufweisen. So ist eine Konstruktion nach dem DE-U-72 29 103 deswegen von Nachteil, weil dort sehr scharfkantige Prägemarken den Drähten gegenüberstehen, so dass allein durch die Windbewegung des Gesamtsystemes die Gefahr des Durchscheuerns dieser Drähte gegeben ist. Diesem Problem haben sich bereits eine Reihe von Erfindern zugewandt, so auch der Erfinder des eingangs genannten DE-U-75 15 899. Andere bekannte, das Gebiet der Spalierpfähle betreffende Lösungen, wie die AT-A-252 648 oder die DE-B-12 12 768, vermögen diese Probleme ebensowenig zu lösen, wie eine sehr aufwendige Konstruktion nach der FR-AI-2 238 424.

Allen bekannten Lösungen ist gemeinsam, dass sie ein quasi stetiges Höhenverstellen der Spanndrähte nicht möglich machen, da die Halteelemente für die Spanndrähte entweder in Ösen oder aber in geschlitzten Übergriffselementen bestehen, die nur ein Ausziehen des Drahtes bzw. ein vollständiges Abwerfen des Drahtes ermöglichen. Auch können bei den bekannten Konstruktionen noch deswegen grosse Korrosionsschäden entstehen, weil die gefertigten Ausstanzungen bei verzinkten Stickeln von ihrem Zinkschutz entblösst werden, so dass sie den geforderten langlebigen Verwendungen nicht standhalten können. Hinzu kommt, dass bei den bekannten Profilformen die statische Belastbarkeit nur in beschränktem Masse geben ist.

Anders als bei der Mehrzahl dieser bekannten Lösungen, zeigt die US-A-1 454 254 einen Stützstab für Zäune bei, dem die Zaundrähte mit einem Drahtbügel an jeder beliebigen Stelle befestigbar sind, und zwar in der Weise, dass an den dort offenbarten Querschnittformen, es handelt sich dabei um T-, U- und H-Profile, ein vorgeformter Bereich des Bügels angebracht und der Bügel unter Festklemmen des Zaundrahtes an einem anderen Profilbereich durch Umbiegen ortsfest festgelegt wird.

Nachteilig ist dabei, dass bei der bekannten Lösung die Kanten des Profiles sehr scharfkantig sind, so dass zum einen die Haltedrähte verletzt werden können. Auch ist bei dieser bekannten sehr alten Konstruktion von vornherein die Nachstellbarkeit in der Höhe nicht bedacht worden, soll z.B. ein solcher Bügel verstellt werden muss er aufgebogen werden, was zu dessen Zerstörung führen kann. Im übrigen war bei der bekannten Lösung eine Nachstellmöglichkeit ohnehin enbehrlich.

Aufgabe der Erfindung ist die Schaffung einer Lösung, mit der zum einen bei hoher Widerstandsfähigkeit der Stützstäbe ein praktisch stetiges Nachstellen der Halteelemente für die Spanndrähte möglich ist, zum anderen ein Korrosionsschutz ermöglicht und gleichzeitig die Spanndrähte gegen Durchscheuern od. dgl. gesichert sind.

Diese Aufgabe wird bei einer Vorrichtung der eingangs bezeichneten Art gemäss der Erfindung dadurch gelöst, dass die Klemmflansche des Stützstabes von schräg zum Stützstabinneren hin gerichteten Profilbereichen gebildet sind und jedes Halteelement den Spanndraht auf Abstand zum Stützstab haltende Führungsabschnitte und wenigstens einen Fixierabschnitt zur Zwischenlage zwischen benachbarten Ausprägungen aufweist.

Durch die spezielle Ausbildung von Bereichen des Stützstabes als Klemmflansche für einen entsprechend ausgebildeten Drahtbügel, der wiederum eine Führung für den Spanndraht aufweist, wird gewährleistet, dass einmal der Stützdraht in jedem zweckmässigen Profil je nach Belastung ausgebildet werden kann und zum anderen ein Verschieben der Spanndrähte über die Bügel praktisch stufenlos in Längsrichtung des Stützstabes möglich wird. Die Führungen für den Spanndraht ermöglichen bei einem Drahtbügel, dass nur gerundete Flächen aufeinanderstossen, so dass im Idealfall lediglich Punktberührung zwischen einem solchen Bügel einerseits und dem Spanndraht andererseits besteht.

Zweckmässig kann es sein, neben der reinen, über Klemmung erreichten Fixierung der Drahtbügel an den Stützstäben, dort wenigstens einen Bereich mit periodisch wiederkehrenden Ein- und/oder Ausbuchtungen zur Lagefixierung der Drahtbügel vorzusehen. Durch eine Einbringung derartiger Ein- und/oder Ausbuchtungen können die Stützstäbe im Wege der Kaltverformung so mit einfachen Mitteln hergestellt werden, wobei gleichzeitig diese Buchten eingeprägt werden können, an denen sich die entsprechenden Bereiche der Drahtbügel in der Gebrauchslage anlegen können.

In weiterer Ausgestaltung sieht die Erfindung vor, dass der Drahtbügel in der Gebrauchslage mit seinen freien Enden die Klemmflansche hintergreift, wobei sich die an der mit den Ein- bzw. Ausbuchtungen versehene Fläche anlegenden Bügelabschnitte in diesem Bereich zur Bildung einer Spreizfeder überkreuzen und der mittlere Teil des Drahtbügels eine Führungslasche für den Spanndraht bildet.

Alternativ kann vorgesehen sein, dass die freien Enden des Drahtbügels zur Bildung der Führungsabschnitte für den Spanndraht unter Bildung einer Bucht oder eines Auges abgebogen sind.

Diese Ausbildung der Klemmbügel macht sowohl ein einfaches Lageverändern auf dem Stützstab möglich. Gleichzeitig wird aber auch dafür gesorgt, dass die Spanndrähte weitestgehend geschont werden, da sie nur an Radien anliegen, d.h. jede scharfe Kante vermieden wird.

Da es Einsatzgebiete gibt, z.B. bei Spalierobst oder Pflanzen, deren Gesamtlebenszeit geringer ist, als die im Weinbau übliche, kann es sinnvoll sein, auch Holz oder Beton oder andere Materialien als Trägerstäbe einzusetzen, auf denen dann entsprechende nach der Erfindung ausgebildete Stützstäbe angebracht werden können, z.B. aufgenagelt oder, im Falle von Beton, eingegossen werden. Hierzu sieht die Erfindung in abgewandelter Form vor, dass der Stützstab als ein auf oder an einem Trägerstab befestigbares Profil ausgebildet ist.

Vorteilhaft ist es, wenn die Ein- und/oder Ausbuchtungen zwischen den Klemmflanschen am Stützstab vorgesehen und/oder zwischen den Klemmflanschen als Drückmarken ausgebildet sind, wie dies in weiterer Ausgestaltung nach der Erfindung vorgesehen ist. Zweckmässig ist dabei die Prägetiefe bzw. -höhe so gewählt, dass sich entweder von Hand oder mit einfachen technischen Mitteln ein Drahtbügel zum Verändern der Lage des Spanndrahtes relativ zum Stützstab über eine derartige Marke hinwegheben lässt.

Grundsätzlich gibt es eine Vielzahl von möglichen Gestaltungen der in Frage kommenden Drahtbügel, wesentlich ist für die Erfindung, dass der Drahtbügel mit Klemmabschnitten zur Anlage an den Klemmflanschen des Stützstabes und mit Führungsabschnitten zur Führung des Spanndrahtes und mit wenigstens einem Fixierabschnitt zur Zwischenlage zwischen benachbarten Ein- bzw. Ausbuchtungen ausgerüstet ist.

Zweckmässig ist der Drahtbügel aus Federstahl gefertigt, um eine einfache Handhabung ebenso zu ermöglichen wie die Gewährleistung für besonders festen Halt der fixierten Spanndrähte.

Als besonders günstige Gestaltung hat sich eine Vorrichtung herausgestellt, die sich dadurch auszeichnet, dass der Stützstab mit zwei Paar von gegenüberliegenden Klemmflanschen ausgerüstet ist, wobei der Stützstab zur Bildung der Klemmflansche querschnittlich im wesentlichen Z-förmig ausgebildet ist und die freien Enden der Z-Schenkel zur Bildung je eines der beiden Klemmflansche nach innen abgewinkelt sind, wobei der andere Klemmflansch jeweils von Bereichen des Z-Steges gebildet ist.

Weitere Vorteile, Einzelheiten und Merkmale der Erfindung ergeben sich aufgrund der nachfolgenden Beschreibung sowie anhand der Zeichnung. Diese zeigt in

Fig. 1 eine perspektivische Darstellung eines Stützstabes mit vier unterschiedlich ausgebildeten Bügeln aus Draht,

Fig. 2 die Aufsicht auf eine Profilform nach einem abgewandelten Ausführungsbeispiel,

Fig. 3 die Aufsicht auf an einem hölzernen Trägerstab (linke Figurenhälfte) bzw. in einem Trägerstab aus Beton (rechte Figurenhälfte) festgelegte Stützstäbe in abgewandelten Ausführungsbeispielen,

Fig. 4 eine an einem Flacheisen als Trägerstab festgelegte abgewandelte Profilform des Stützstabes,

Fig. 5 einen aus zwei gleichen Teilen gebildeten Stützstab mit mittlerem Trägerstab und in

Fig. 6 eine weitere abgewandelte Profilform des Stützstabes mit einem Trägerstab.

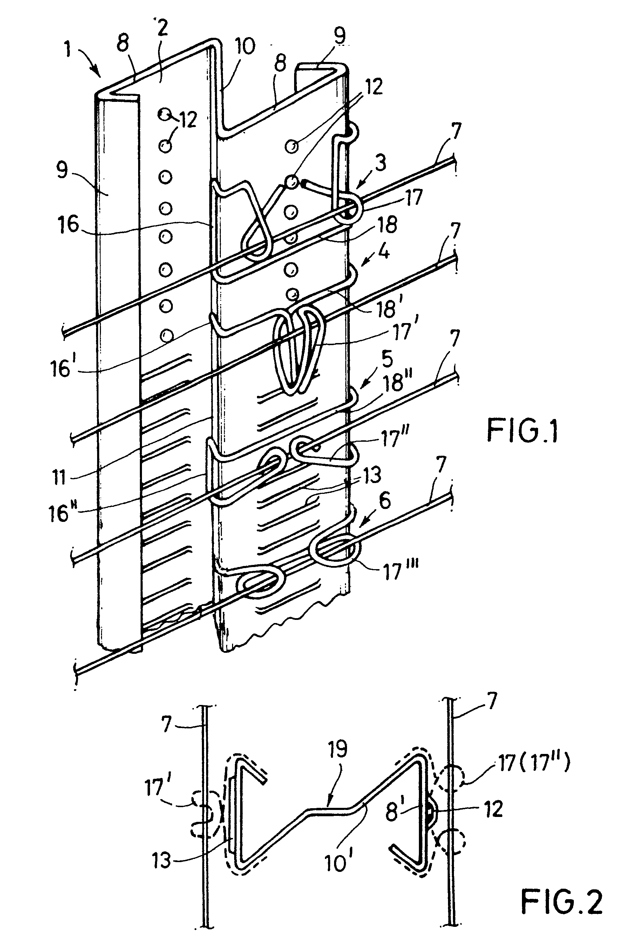

Die in den Figuren allgemein mit 1 bezeichnete Vorrichtung wird zunächst anhand der Fig. 1 näher beschrieben.

Ein in Fig. 1 im wesentlichen querschnittlich Z-förmiger Stützstab 2 trägt nur als Beispiel dienende, unterschiedlich ausgebildete vier Drahtbügel mit den Bezugszeichen 3–6, wobei der Drahtbügel 3 der obere und der Drahtbügel 6 der untere Drahtbügel ist. Diese Drahtbügel halten in der Gebrauchslage Spanndrähte 7.

Zunächst wird die Ausbildung des Stützstabes 2 beschrieben. Wie aus Fig. 1 erkennbar, sind die freien Enden der mit 8 bezeichneten Z-Schenkel zur Bildung jeweils eines Klemmflansches 9 nach innen abgewinkelt. Diese Klemmflansche 9 wirken zusammen mit Bereichen des Z-Steges 10, die ebenfalls nach innen abgewinkelte Klemmflansche, mit 11 bezeichnet, bilden. An diese Klemmflansche 9 bzw. 11 legen sich entsprechende Teile der Drahtbügel 3–5 an, wie dies weiter unten noch näher beschrieben wird.

Aus Fig. 1 ist darüber hinaus erkennbar, dass im dargestellten Beispiel die Z-Schenkel 8 mit einer Vielzahl von periodisch wiederkehrenden Ein- bzw. Ausprägungen ausgerüstet sind. In den Figuren sind in der Regel Ausprägungen dargestellt, d.h. durch Drücken von der Innenseite her erzeugte Drückmarken. Es kann sich allerdings auch um nach innen gerichtete Dellen handeln, die mit darin geführten Drahtbügelbereichen zusammenwirken.

Die Drahtbügel 3–5 weisen Klemmabschnitte 16 bzw. 16' bzw. 16'', Führungsabschnitte 17, 17' bzw. 17'' und Fixierabschnitte 18, 18' bzw. 18'' auf, deren Funktion nachfolgend beschrieben ist.

Bei einem Drahtbügel 3 verlaufen die Klemmabschnitte 16 parallel zur Längserstreckung des Stützstabes 2, wobei der Fixierabschnitt 18 den gesamten Z-Schenkel senkrecht zur Längserstreckung des Stützstabes 2 überbrückt und zwischen zwei Ausprägungen 12 fixiert ist. Die freien Enden des Drahtbügels 3 bilden als Augen die Führungsabschnitte 17 für den Spanndraht 7. Sie sind so weit von der Oberfläche unter Anlage der freien Enden auf der Oberfläche des Stützstabes 2 entfernt, dass der Spanndraht 7 einen Abstand zum Stützstab 2 aufweist, wie dies in Fig. 2, rechte Figurenhälfte, gestrichelt angedeutet ist.

Ein abgewandeltes Ausführungsbeispiel stellt der Drahtbügel 4 dar, dessen Klemmabschnitte 16' von den freien Enden des Drahtbügels 4 gebildet werden, die sich an den Klemmflanschen 9 bzw. 11 des Stützstabes 2 anlegen. Der mittlere Bereich des Bügels 4 ist als Führungsabschnitt 17' ausgebildet, während die Fixierabschnitte 18' sich im Mittelbereich des Drahtbügels 4 zur Erzeugung einer Spreizfeder überkreuzen. Der ungefähre Verlauf ist in Fig. 2, linke Figurenhälfte, wiederum gestrichelt dargestellt.

Eine weitere Möglichkeit, einen Drahtbügel auszubilden, stellt der Drahtbügel 5 dar, dessen freie Enden nicht als Augen die Führungsabschnitte 17 darstellen, sondern lediglich Buchten, wie dies in Fig. 1 angedeutet ist.

Schliesslich bildet die Ausführungsform eines Drahtbügels 6 eine Abwandlung der vorangegangenen, da dort die freien Enden ebenfalls mit den Klemmflanschen 9 bzw. 11 korrespondieren. Auch dort sind die Führungsabschnitte 17''' als Augen ausgebildet. Wie erkennbar, kann beispielsweise auch ein Drahtbügel nach der Gestaltung des Drahtbügels 4 bei diesem abgewandelten Ausführungsbeispiel des Stützstabes 2 eingesetzt werden.

Nachfolgend werden noch einige zweckmässige, der Erfindung zugrundeliegende Profilformen beschrieben.

Die Fig. 2 zeigt eine besonders günstige Ausgestaltung eines Profils für einen Stützstab, welches sich, abwechselnd von der reinen Z-Form, dadurch auszeichnet, dass der mit 19 bezeichnete Mittelbereich des Z-Steges 10' senkrecht zum parallelen Verlauf der Hauptflächen der Z-Schenkel 8' ausgerichtet ist, was dem Profil eine besondere Widerstandsfähigkeit verleiht.

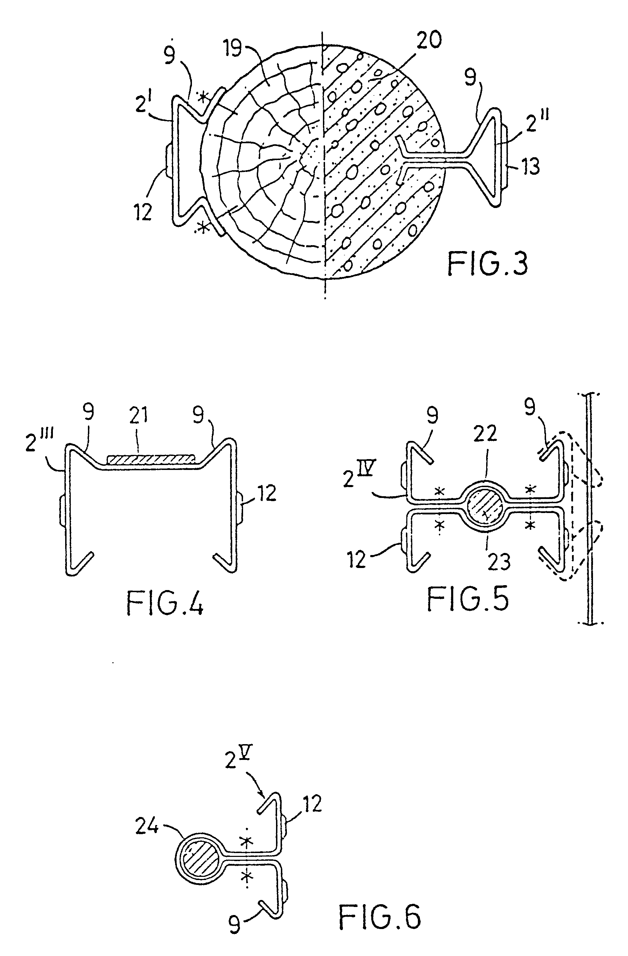

In Fig. 3 ist eine Möglichkeit skizziert, den Stützstab 2' als z.B. aufschraub- bzw. aufnagelbares Blechprofil auszubilden, welches an einem Trägerstab 20 aus Holz (linke Figurenhälfte) oder in einem Trägerstab 20 aus Beton festlegbar ist. Wesentlich ist dabei, wie auch bei den weiteren Profilen der Stützstäbe 2''' (Fig. 4), 2$^{IV}$ (Fig. 4) und 2$^V$ (Fig. 6), dass die Profile Klemmflansche 9 bzw. 11 und Ein- bzw. Ausprägungen 12 bzw. 13 aufweisen.

Fig. 4 zeigt ein im wesentlichen U-förmiges Profil eines Stützstabes 2''', das eigensteif in das Erdreich eintreibbar ist oder aber bei geringerer Wandstärke an einem Flacheisen als Trägerstab 21 festlegbar ist.

In Fig. 5 ist ein abgewandeltes Ausführungsbeispiel insofern dargestellt, als dort aus zwei im wesentlichen U-förmigen Stützstäben 2$^{IV}$ mit einem mittleren etwa halbkreisförmigen gebogenen Bereich 22 ein geschlossenes Profil um einen Träger 23 durch Verschrauben, Verschweissen o.dgl. herstellbar ist, während in Fig. 6 ein einen Träger 24 vollständig umgreifendes Profil 2$^V$ dargestellt ist.

Natürlich sind die beschriebenen Ausführungsbeispiele noch in vielfacher Hinsicht abzuändern, ohne den Grundgedanken der Erfindung zu verlassen. So ist die Erfindung insbesondere nicht auf ein bestimmtes Material, sei es für Stützstäbe und/oder die Bügel, beschränkt, wenngleich zweckmässig ist, die Stützstäbe aus kaltverformtem, feuerverzinktem Metall und die Bügel aus Federstahl zu fertigen.

**Patentansprüche**

1. Vorrichtung (1) zur Herstellung von Spanndrähten (7) für den Einsatz im Wein- und Obstanbau mit einem in das Erdreich eintreibbaren aus profiliertem Blech gebildeten und wenigstens zwei in seiner Längsrichtung verlaufende Klemmflansche (9, 11) aufweisenden Stützstab (2–2$^V$), wobei der Stützstab (2–2$^V$), ein mit Ausprägungen (12, 13) zwischen den Klemmflanschen (9, 11) versehenen Mittelabschnitt aufweist, und mit den Klemmflanschen (9, 11) zugeordneten als Bügel aus Draht, Kunststoff od.gl. ausgebildeten Spanndraht-Halteelementen (3–6), mit Klemmabschnitten (16) zur Anlage an den Klemmflanschen (9, 11), dadurch gekennzeichnet, dass die Klemmflansche (9, 11) des Stützstabes (2) von schräg zum Stützstabinneren hin gerichteten Profilbereichen gebildet sind und jedes Halteelement (3–6) den Spanndraht (7) auf Abstand zum Stützstab (2–2$^V$) haltende Führungsabschnitte (17–17''') und wenigstens einen Fixierabschnitt (18–18'') zur Zwischenlage zwischen benachbarten Ausprägungen (12, 13) aufweist.

2. Vorrichtung nach Anspruch 1, dadurch gekennzeichnet, dass der Stützstab mit Ein- bzw. Ausbuchtungen (12 bzw. 13) an zwischen den Klemmflanschen liegenden Profilbereichen und die Halteelemente (3–6) mit wenigstens einem Fixierabschnitt (18) zur Zwischenlage zwischen benachbarten Ein- bzw. Ausbuchtungen (12 bzw. 13) ausgerüstet sind.

3. Vorrichtung nach Anspruch 2, dadurch gekennzeichnet, dass der Drahtbügel (4) in der Gebrauchslage mit seinen freien Enden (16') die Klemmflansche (9 bzw. 11) hintergreift, wobei sich die an der mit den Ein- bzw. Ausbuchtungen (12 bzw. 13) versehenen Fläche anlegenden Bügelabschnitte in diesem Bereich zur Bildung einer Spreizfeder überkreuzen und der mittlere Teil des Drahtbügels (4) eine Führungslasche (17') für den Spanndraht (7) bildet.

4. Vorrichtung nach einem der vorangehenden Ansprüche, dadurch gekennzeichnet, dass die freien Enden des Drahtbügels (3 bzw. 5) zur Bildung der Führungsabschnitte (17 bzw. 17'') für den Spanndraht (17) unter Bildung einer Bucht oder eines Auges abgebogen sind.

5. Vorrichtung nach Anspruch 1, dadurch gekennzeichnet, dass der Stützstab (2′ bzw. 2″ bzw. 2IV bzw. 2V) als auf oder an einem Trägerstab befestigbares Profil ausgebildet ist.

6. Vorrichtung nach einem der vorangehenden Ansprüche, dadurch gekennzeichnet, dass der Stützstab (2) einen Bereich mit periodisch wiederkehrenden Ein- und/oder Ausbuchtungen (12 und/oder 13) zur Lagefixierung der Drahtbügel (3–6) aufweist, wobei insbesondere die Ein- und/oder Ausbuchtungen (12, 13) zwischen den Klemmflanschen (9, 11) am Stützstab (2) vorgesehen sind und/oder die Ein- bzw. Ausbuchtungen (12) zwischen den Klemmflanschen (9, 11) als Drückmarken ausgebildet sind.

7. Vorrichtung nach Anspruch 1 oder einem der folgenden, dadurch gekennzeichnet, dass der Drahtbügel (3) mit wenigstens einem Fixierabschnitt (18) zur Zwischenlage zwischen benachbarten Ein- bzw. Ausbuchtungen (12 bzw. 13) ausgerüstet ist.

8. Vorrichtung nach einem der vorangehenden Ansprüche, dadurch gekennzeichnet, dass die Drahtbügel (3–6) aus Federstahl gefertigt sind.

9. Vorrichtung nach Anspruch 1 oder einem der folgenden, dadurch gekennzeichnet, dass der Stützstab (2) mit zwei Paar von gegenüberliegenden Klemmflanschen ausgerüstet ist, wobei der Stützstab (2) zur Bildung der Klemmflansche querschnittlich im wesentlichen Z-förmig ausgebildet ist und die freien Enden der Z-Schenkel (8) zur Bildung je eines der beiden Klemmflansche (9) nach innen abgewinkelt sind, wobei der andere Klemmflansch (11) jeweils von Bereichen des Z-Steges (10) gebildet ist.

## Revendications

1. Dispositif (1) de retenue de fils tendeurs (7) pour une utilisation dans des vignobles et des vergers, comprenant un piquet de support (2–2V) pouvant être enfoncé dans la terre, fabriqué en tôle profilée et présentant au moins deux ailes de coincement (9, 11) s'étendant dans son sens longitudinal, ce piquet de support (2–2V) comportant une région centrale munie d'empreintes (12, 13) entre les ailes de coincement (9, 11); ainsi que des éléments (3–6) de retenue des fils tendeurs, associés aux ailes de coincement (9, 11), réalisés en tant qu'attaches en fil métallique, en matière plastique ou matériau analogue et pourvus de zones de coincement (16), destinées à s'appliquer contre les ailes de coincement (9, 11), caractérisé par le fait que les ailes de coincement (9, 11) du piquet de support (2) sont formées par des régions profilées orientées à l'oblique vers l'intérieur du piquet de support, chaque élément de retenue (3–6) comprenant des zones de guidage (17–17′′′) qui maintiennent le fil tendeur (7) à distance du piquet de support (2–2V), ainsi qu'au moins une zone de blocage (18–18″) devant être interposée entre des empreintes voisines (12, 13).

2. Dispositif selon la revendication 1, caractérisé par le fait que le piquet de support est muni de saillies respectivement rentrantes ou sortantes (12 ou 13) dans des régions profilées situées entre les ailes de coincement, les éléments de retenue (3–6) étant pourvus d'au moins une zone de blocage (18) devant être intercalée entre des saillies voisines respectivement rentrantes ou sortantes (12 ou 13).

3. Dispositif selon la revendication 2, caractérisé par le fait que, en position d'utilisation, l'attache (4) en fil métallique emprisonne par-derrière les ailes de coincement (9 ou 11) par ses extrémités libres (16′), auquel cas les zones de cette attache appliquées contre la surface pourvue des saillies respectivement rentrantes ou sortantes (12 ou 13) se croisent en superposition dans cette région pour former un ressort d'écartement, et la partie centrale de ladite attache (4) en fil métallique forme une patte (17′) de guidage du fil tendeur (7).

4. Dispositif selon l'une des revendications précédentes, caractérisé par le fait que les extrémités libres de l'attache (3 ou 5) en fil métallique sont cintrées en formant une anse ou un œillet, afin de constituer les zones (17 ou 17″) de guidage du fil tendeur (7).

5. Dispositif selon la revendication 1, caractérisé par le fait que le piquet de support (2′; 2″; 2IV; 2V) est réalisé sous la forme d'un profil pouvant être fixé sur ou contre un pieu de support.

6. Dispositif selon l'une des revendications précédentes, caractérisé par le fait que, le piquet de support (2) comporte une région munie de saillies rentrantes et/ou sortantes (12 et/ou 13) à répétition périodique pour bloquer à demeure les attaches (3–6) en fil métallique, lesdites saillies rentrantes et/ou sortantes (12, 13) étant en particulier prévues entre les ailes de coincement (9, 11) sur le piquet de support (2), et/ou ces saillies respectivement rentrantes ou sortantes (12) étant réalisées en tant qu'empreintes repoussées entre les ailes de coincement (9, 11).

7. Dispositif selon la revendication 1 ou l'une des suivantes, caractérisé par le fait que l'attache (3) en fil métallique est munie d'au moins une zone de blocage (18) devant être interposée entre des saillies voisines respectivement rentrantes ou sortantes (12 ou 13).

8. Dispositif selon l'une des revendications précédentes, caractérisé par le fait que les attaches (3–6) en fil métallique sont fabriquées en acier à ressorts.

9. Dispositif selon la revendication 1 ou l'une des suivantes, caractérisé par le fait que le piquet de support (2) est équipé de deux paires d'ailes de coincement opposées, ce piquet de support (2) étant réalisé de section sensiblement en Z pour former ces ailes de coincement, et les extrémités libres des branches (8) du Z étant coudées vers l'intérieur pour former l'une respective (9) des deux ailes de coincement, l'autre aile de coincement (11) étant à chaque fois formée par des régions de la barre (10) du Z.

## Claims

1. Apparatus (1) for holding guy wires (7) for use in wine and fruit growing, comprising a support bar (2–2V) which can be driven into the ground and which is formed from shaped sheet metal and which has at least two clamping flanges (9, 11) extending in its longitudinal direction the support bar (2–2$^V$) having a middle section which is provided with outwardly pressed portions (12, 13) between the clamping flanges (9, 11) and guy wire holding elements (3–6) which are associated with the clamping flanges (9, 11) and which are formed as loop members comprising wire, plastics material or the like, with clamping sections (16) for bearing against the clamping flanges (9, 11), characterised in that the clamping flanges (9, 11) of the support bar (2) are formed by shaped regions which are directed inclinedly towards the interior of the support bar and each holding element (3, 6) has guide portions (17–17''') for holding the guy wire (7) at a spacing from the support bar (2–2$^V$) and at least one fixing portion (18–18'') for lying between adjacent outwardly pressed portions (12, 13).

2. Apparatus according to claim 1 characterised in that the support bar is provided with inwardly or outwardly extending portions (12 and 13 respectively) at shaped regions between the clamping flanges, and the holding elements (3–6) are provided with at least one fixing section (18) for lying between adjacent inwardly or outwardly extending portions (12 or 13).

3. Apparatus according to claim 2 characterised in that the wire loop (4), in the positions of use, engages with its free ends (16') behind the clamping flanges (9 and 11), wherein the loop portions which bear against the surface porvided with the inwardly our outwardly extending portions (12 or 13) cross over each other in that region to form a spreading spring and the middle part of the wire loop (4) forms a guide clip (17') for the guy wire (7).

4. Apparatus according to one of the preceding claims characterised in that the free ends of the wire loop (3 or 5) are bent over to form the guide portions (17 or 17''), for the guy wire (7), forming an eye or a bight.

5. Apparatus according to claim 1 characterised in that the support bar (2' or 2'' or 2$^{IV}$ or 2$^V$) is formed as a shaped member which can be secured on or to a carrier bar.

6. Apparatus according to one of the preceding claims characterised in that the support bar (2) has a region with periodically recurring inwardly and/or outwardly extending portions (12 and/or 13) for fixing the position of the wire loops (3–6), wherein in particular the inwardly and/or outwardly extending portions (12, 13) are provided between the clamping flanges (9, 11) on the support bar (2) and/or the inwardly or outwardly extending portions (12) are formed, between the clamping flanges (9 11), as pressure marks.

7. Apparatus according to claim 1 or one of the following claims characterised in that the wire loop (3) is provided with at least one fixing section (18) for lying between adjacent inwardly or outwardly extending portions (12 or 13).

8. Apparatus according to one of the preceding claims characterised in that the wire loops (3–6) are produced from spring steel.

9. Apparatus according to claim 1 or one of the following claims characterised in that the support bar (2) is provided with two pairs of oppositely disposed clamping flanges, wherein the support bar (2) is of a substantially Z-shaped cross-sectional configuration to form the clamping flanges and the free ends of the limb portions (8) of the Z-shaped configuration are bent over inwardly to form a respective one of the two clamping flanges (9), the other clamping flange (11) being respectively formed by regions of the web portion (10) of the Z-shaped configuration.

FIG.1

FIG.2

FIG.3

FIG.4

FIG.5

FIG.6